# EUROPEAN PATENT SPECIFICATION

(11) **EP 0 541 680 B1**
(45) Date of publication and mention of the grant of the patent: **26.04.1995**
(21) Application number: 91914568.0
(22) Date of filing: 29.07.1991
(51) Int. Cl.: F16C 39/06

(54) **MAGNETIC BEARINGS**
MAGNETISCHE LAGER
PALIERS MAGNETIQUES

(30) Priority: 28.07.1990 GB 9016627
(43) Date of publication of application: 19.05.1993
(73) Proprietor: THE GLACIER METAL COMPANY LIMITED, Northwood Hills Middlesex HA6 1LN (GB)
(72) Inventor: NEW, Nigel, Henry, Middlesex HA3 7LS (GB)
(74) Representative: Hammersley, John
(86) International application number: PCT/GB91/01283
(87) International publication number: WO 92/02738

(56) References cited:
- FR-A- 2 574 880
- US-A- 4 180 296
- PATENT ABSTRACTS OF JAPAN vol. 7,no. 126 (M-219)(1271) 31 May 1983 & JP,A,58 042 824 (DAINI SEIKOSHA) 12 March 1983

## Description

This invention relates to magnetic bearings and is in particular concerned with thrust bearings for use in conjunction with rotating shafts.

It is well-known to support a rotatable shaft by means of a magnetic bearing. It is also known to control the axial displacement of such a shaft by means of a magnetic thrust bearing, as opposed to a conventional thrust race. A magnetic thrust bearing comprises a rotor mounted on the rotable shaft whose axial displacement is to be regulated and at least one fixed stator element mounted to associated hardware. The stator element has associated with it the energising windings whereby the position controlling force is generated, and regulated, typically under the control of electronic sensing/positioning circuitry. It is usual to manufacture the rotor component from solid, iron-based alloys and the same material may be used for the stator element or elements. This is acceptable where the thrust load is fairly static and the rate of change of flux is not a significant factor.

However, where there are dynamic load changes accompanied by a high rate of change of flux, solid magnetic components are undesirable because of the eddy currents developed. These result in high power loss and very significant heating of the bearing components. Accordingly, a laminated construction is preferred for such applications.

It is known from FR-A-2,574,880 to form the stator element of a magnetic bearing from laminations of suitable magnetic material. The laminations are individually of uniform thickness and collected together in parallel sided stacks or blocks, which stacks are arranged about the rotation axis of an associated rotor. It will be appreciated that although each stack with adjacent laminations is magnetically efficient there are gaps between the blocks which increase in circumferential width with increasing radial distance from the rotation axis. The rotor is a homogeneous body and not influenced by the gaps in magnetic coupling (in the circumferential direction) in relation to any particular circumferential positions occupied by the rotor, although such rotor is susceptible to eddy currents therein.

If it is desired to reduce the effects of rotor eddy currents the rotor is preferably also laminated.

But if such a construction is to be effective, simple radially-directed laminations are unsatisfactory because of the reduction in magnetic surface area in the progressively radially outward direction. It will be noted that a typical lamination thickness is on the order of 0.1 to 0.25mm. Wedge shape laminations are not a satisfactory solution, because of this fact. One proposed solution is to increase the diameter of the co-operating components, though this does not really address the further problem which arises when the respective rotor and stator laminations do not actually align with one another at their outer periphery. Where there is no alignment, there will be a high reluctance; where there is alignment, there will be a low reluctance. The overall effect is one of rapid changes leading to higher winding losses and to the generation of high frequency transients in the windings.

It is an object of this invention to minimise these problems.

According to this invention, a set of laminated stator and rotor components for a magnetic thrust bearing each component comprising a plurality of laminations, directed generally radially of a hub or other support surrounding an axis of rotation of a shaft located by the bearing at a radial distance, whose roots at the hub extend along the direction of said axis and which radially distally of the roots are progressively twisted relative to said axis direction such that in a circumferential direction the effective width of any lamination at any given radial distance from the root is not less than any separation between it and an adjacent lamination at that distance.

By progressively twisting individual laminations about their point of attachment to a central hub or other support that surrounds the said axis of rotation of the shaft, the gap between them at increasing radial distance from the axis is contained and may be prevented from increasing without increasing their thickness. In other words, the effective area of metal as seen in an axial direction is maximised, in contrast to that achieved by radially aligned flat laminations. Preferably the laminations of the stator element are twisted in the opposite sense to those of the rotor, to enhance their mutual alignment in use.

In order that the invention be better understood, an embodiment of it will now be described with reference to the accompanying drawings, in which:-
Figures 1, 2 and 3 illustrate prior art constructions, and
Figure 4 and Figures 4A to 4D illustrate the present invention.

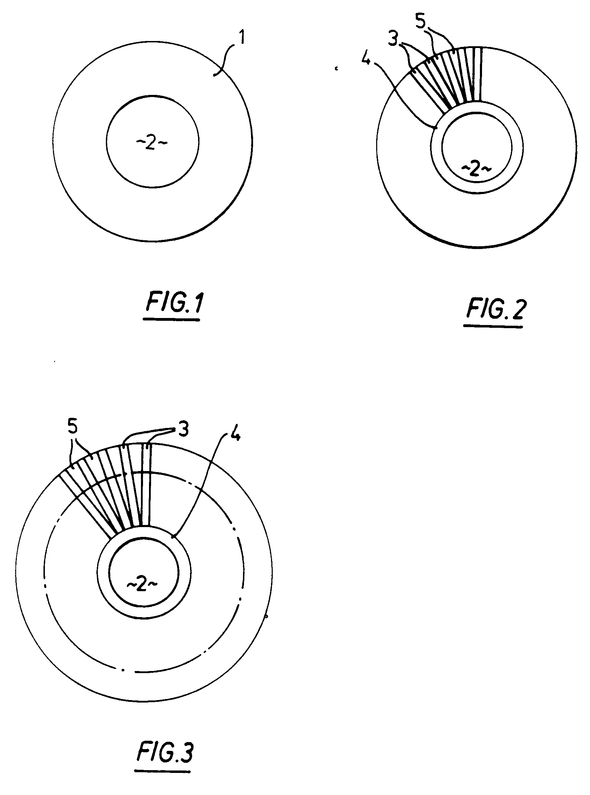

Figure 1 is a side view of a solid metal thrust collar 1. In use, it is mounted on a central shaft 2, and disposed between a pair of corresponding shaped stator elements provided with energising windings (not shown or further discussed here). The stator elements would in this case also be of solid metal, and provided with annular recesses for the windings. Such an arrangement might be used for light duty applications, particularly where stable and relatively modest axial thrust forces are generated.

Figure 2 shows a simple laminated thrust collar 2 corresponding to Figure 1, but having a plurality of radial laminations 3 supported by a central hub 4. It will be noted that the radially outermost tips of these laminations are separated by generally triangular gaps 5, which would in practice be filled with a magnetically inert material such as an epoxy or phenolic resin composition.

Figure 3 illustrates how the collar of Figure 2 would need to be increased in diameter in order to achieve the same effective magnetic area as that of the solid collar of Figure 1. As only the diameter is changed, the same reference numerals as Figure 2 have been used.

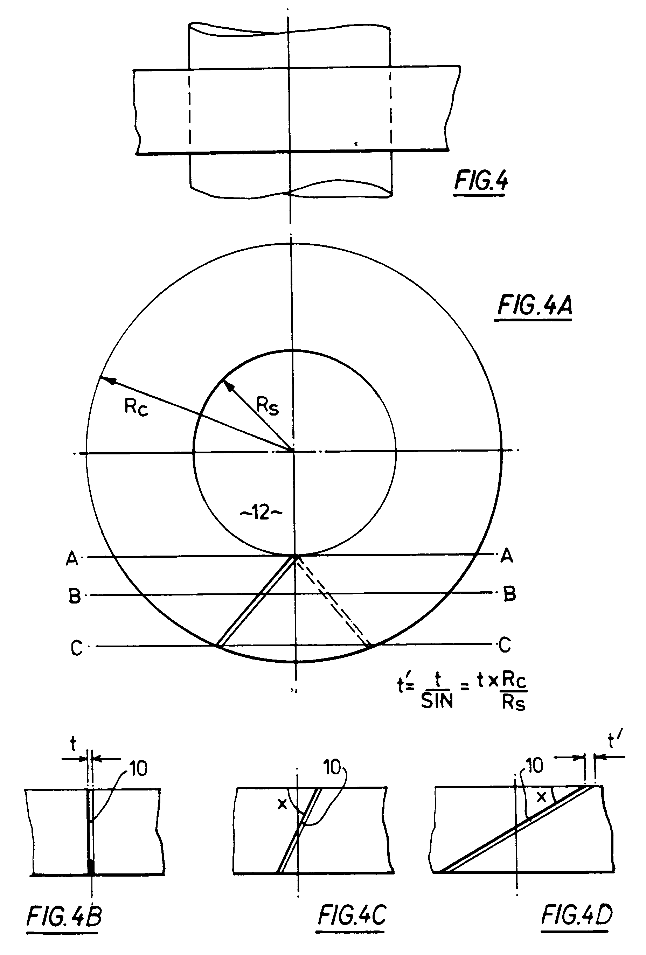

Figure 4 is a plan view of a component of the set in accordance with the present invention showing a laminated thrust collar in relation to a hub that is a shaft for a rotor component or surrounds the shaft for a stator component. The collar per se has a plane extending perpendicularly to the axis shaft rotation. Details of the component structure are shown in Figures 4(A) to 4(D).

Figure 4A is a view taken along the axis of rotation, in the manner of Figures 1 to 3, showing a side view of the hub and laminated collar and the radial relationships between them.

Figures 4B-4D inclusive are sectional views of the laminated collar of Figure 4A, but as seen at different radial displacements from the axis of rotation.

Referring also to Figure 4B, a single lamination to is shown representing one of a plurality of laminations arranged about the axis of rotation to comprise the collar. The (and each) lamination is parallel sided, of uniform width t, between the sides. The lamination extends generally radially with respect to the axis of rotation from a root at a radial distance Ra from the axis of shaft rotation and at the root the plane of the lamination extends along the direction of the axis.

Thus in Figure 4B, at a radial distance Ra (shown in Figure 4A as Rs), the width of the lamination (in a circumferential direction) is t, and in a conventional lamination its effective magnetic area would be t multiplied by (Rc - Ra) the radial depth from the hub 12 to the outer rim. Figure 4C shows the same lamination, but this time in section on line BB at a radial distance Rb. In this case and in accordance with the invention, the lamination between the root and radially outermost tip is progressively twisted with respect to the direction of the rotation axis from the disposition shown in Figure 4B as a function of radial distance. The effective width t′ at Rb is now t/sin x, where x is the angle relative to the plane in which the collar lies and also the face of the collar. It will be seen that t′ is t. Rb/Ra, the effective area being increased over that of Figure 4B by the factor Rb/Ra.

At the radially outermost point, as seen in Figure 4D along line CC, the final twist angle relative to the plane of the collar is y and the value of t′ is now t.Rc/Ra.

Rc is greater than either Ra or Rb, so the effective width of the lamination end in a circumferential direction, that is, when viewed along the axis of rotation, increases with radial distance and the effective area of the lamination end is greater and accordingly, the overall performance achieved by progressive twisting is much closer to that of a solid collar such as that of Figure 1 than is that of the simple flat radial assembly of Figure 2.

The set of stator and rotor components are intended to be used with the end faces of the collars facing each other in an axial direction such that magnetic flux couples between them for all rotor positions. In addition to improved coupling obtained by effectively increasing the areas of the lamination, the laminations of the rotor component may be twisted with respect to the root about the axis direction in an opposite directional sense to those of the stator component to maximise mutual alignment of laminations between the collars of the components.

It will be appreciated that in the arrangement of Figure 4 although the root width is fixed by the hub dimensions, twisting reduces the axial thickness of the collar radially outwardly of the lamination roots if each lamination is of the same length between its ends as at the root. Laminations which are wedge shaped in side view may be used to counteract this. Figure 4 does in fact assume that this particular construction is used.

It will be seen from Figures 4B and 4D that the length of the lamination, between its ends in the plane of the lamination, at Ra is less than the length of the lamination in its plane at Rc such that the length at the root divided by the length at the tip is equal to (sin y) and thus equals the radial distance from the axis of rotation to the root divided by the radial distance to the tip, that is, Sin y = (Ra/Rc).

## Claims

1. A set of laminated stator and rotor components for a magnetic thrust bearing, each component comprising a plurality of laminations (10), directed generally radially of a hub (12) or other support surrounding an axis of rotation of a shaft located by the bearing at a radial distance (Ra), whose roots at the hub extend along the direction of said axis and which radially distally of the roots are progressively twisted relative to said axis direction such that in a circumferential direction the effective width (t′) of any lamination at any given radial distance (Rb,Rc) from the root is not less than any separation between it and an adjacent lamination at that distance.

2. A set of laminated stator and rotor components according to claim 1 wherein the radially outermost tips of the laminations (10) of each component lie in a plane making an angle (y) with the plane in which the component lies, whereby the sine of that angle is equal to the radius at the root divided by the radius at the outermost tips (sin y = Ra/Rc).

3. A set of laminated stator and rotor components as claimed in claim 2 in which the laminations (10) of each component at any radial distance (Rb,Rc) outwardly of the root (Ra) have an effective width (t′) equal to the width at the root (t) multiplied by the radius (Rb,Rc) divided by the radius at the root (Ra).

4. A set of laminated stator and rotor components as claimed in claim 2 or claim 3 in which the length of extension of each lamination (10) at the root, between ends in the plane of the lamination, is less than the length of the lamination in its plane at its radially outermost tip and said length at the root divided by the length at the tip equals the radial distance from the axis of rotation to the root divided by the radial distance to the outermost tip (Ra/Rc), whereby the corresponding ends of the twisted laminations between the roots and tips lie in planes extending perpendicularly to the axis of rotation.

5. A set of laminated stator and rotor components according to any one of the preceding claims wherein the laminations (10) of the rotor component are twisted with respect to the root about said axis direction in an opposite directional sense to those of the stator component to maximise their mutual alignment between components.

6. A magnetic thrust bearing provided with an axial thrust bearing comprising a set of laminated stator and rotor components according to any preceding claim.

## Patentansprüche

1. Satz von beschichteten Stator- und Rotorkomponenten für ein magnetisches Axialdrucklager, wobei jede Komponente eine Vielzahl von Schichten (10) umfaßt, welche generell radial zu einer Nabe (12) oder einer anderen Stütze, welche eine Rotationsachse einer Welle umgibt, gerichtet sind, angeordnet durch das Lager an einem radialen Abstand (Ra), dessen Wurzeln- bzw. Fußpunkte sich an der Nabe längs der Richtung der Achse erstrecken und welche radial entfernt der Wurzeln progressiv, relativ zu der Achsenrichtung, derart verdreht sind, daß in einer umfänglichen Richtung die effektive Breite (t′) einer Schicht bei einem gegebenen radialen Abstand (Rb, Rc) von der Wurzel nicht geringer ist als eine Aufteilung bzw. Trennung zwischen ihr und einer benachbarten Schicht in dieser Beabstandung.

2. Satz von beschichteten Stator- und Rotorkomponenten gemäß Anspruch 1, worin die radial äußersten Spitzen der Schichten (10) von jeder Komponente in einer Ebenen liegt, welche einen Winkel (Y) mit der Ebene erzeugt, in welcher die Komponente liegt, wobei der Sinus dieses Winkels gleich dem Radius an der Wurzel ist, geteilt durch den Radius an den äußersten Spitzen (sin y = Ra/Rc).

3. Satz von beschichteten Stator- und Rotorkomponenten gemäß Anspruch 2, wobei die Schichten (10) von jeder Komponente bei einem radialen Abstand (Rb, Rc) außerhalb der Wurzel (Ra) eine effektive Breite (t′) aufweisen, welche gleich der Breite an der Wurzel (t′) multipliziert mit dem Radius (Rb, Rc) dividiert durch den Radius an der Wurzel (Ra) ist.

4. Satz von beschichteten Stator- und Rotorkomponenten gemäß Anspruch 2 oder Anspruch 3, wobei die Länge der Ausdehnung von jeder Schicht (10) an der Wurzel zwischen Enden in der Ebene der Schicht geringer ist als die Länge der Schicht in ihrer Ebene an ihrer radial äußersten Spitze und wobei die Länge an der Wurzel geteilt durch die Länge an der Spitze gleich dem radialen Abstand von der Rotationsachse zu der Wurzel geteilt durch den radialen Abstand zu der äußersten Spitze (Ra/Rc) ist, wobei die entsprechenden Enden der gedrehten bzw. verdrehten Schichten zwischen den Wurzeln und den Spitzen in Ebenen liegen, welche sich senkrecht zu der Rotationsachse erstrekken.

5. Satz von beschichteten Stator- und Rotorkomponenten gemäß einem der vorangehenden Ansprüche, wobei die Schichten (10) der Rotorkomponenten verdreht sind und zwar bezüglich der Wurzel, um die Achsenrichtung in einer entgegengesetzten Richtung zu jener der Statorkomponente auszurichten zum Maximieren ihrer gegenseitigen Ausrichtung zwischen den Komponenten.

6. Magnetisches Axialdrucklager versehen mit einem axialen Axialdrucklager umfassend einen Satz von beschichteten Stator- und Rotorkomponenten gemäß einem der vorangegangenen Ansprüche.

## Revendications

1. Ensemble d'éléments de rotor et de stator lamifiés pour un palier de butée magnétique, chaque élément comprenant une pluralité de structures lamifiées (10), dirigées généralement radialement par rapport à un moyeu (12) ou un autre support entourant un axe de rotation d'un arbre positionné par le palier à une distance radiale (Ra), dont les racines au moyeu s'étendent le long de la direction dudit axe et qui à distance radialement des racines subissent une torsion progressive relativement à ladite direction de l'axe de manière que dans une direction circonférentielle la largeur effective (t′) de toute structure lamifiée à n'importe quelle distance radiale donnée (Rb, Rc) depuis la racine ne soit pas inférieure à toute séparation entre elle et une structure lamifiée adjacente à cette distance.

2. Ensemble d'éléments de rotor et de stator lamifiés selon la revendication 1, dans lequel les extrémités radialement les plus vers l'extérieur des structures lamifiées (10) de chaque élément se situent dans un plan formant un angle (y) avec le plan dans lequel l'élément se situe, de sorte que le sinus de cet angle soit égal au rayon à la racine divisé par le rayon aux extrémités les plus vers l'extérieur (sin y = Ra/Rc).

3. Ensemble d'éléments de rotor et de stator lamifiés selon la revendication 2, dans lequel les structures lamifiées (10) de chaque élément à n'importe quelle distance radiale (Rb, Rc) vers l'extérieur de la racine (Ra) ont une largeur effective (t′) égale à la largeur à la racine (t) multipliée par le rayon (Rb, Rc) divisé par le rayon à la racine (Ra).

4. Ensemble d'éléments de rotor et de stator lamifiés selon la revendication 2 ou 3, dans lequel la longueur d'extension de chaque structure lamifiée (10) à la racine, entre ses extrémités dans le plan de la structure lamifiée, est inférieure à la longueur de la structure lamifiée dans son plan à son extrémité radialement la plus vers l'extérieur et ladite longueur à la racine divisée par la longueur à l'extrémité est égale à la distance radiale de l'axe de rotation à la racine divisée par la distance radiale jusqu'à l'extrémité la plus vers l'extérieur (Ra/Rc), de sorte que les extrémités correspondantes des structures lamifiées présentant une torsion entre les racines et les extrémités se situent dans des plans s'étendant perpendiculairement à l'axe de rotation.

5. Ensemble d'éléments de rotor et de stator lamifiés selon l'une quelconque des revendications précédentes, dans lequel les structures lamifiées (10) de l'élément de rotor subissent une torsion relativement à la racine autour dudit axe de rotation dans une direction opposée à la direction de torsion des structures lamifiées de l'élément de stator pour maximiser l'alignement entre les éléments.

6. Palier de butée magnétique consistant en un palier axial à butée comprenant un ensemble d'éléments de rotor et de stator lamifiés selon l'une quelconque des revendications précédentes.
